# EUROPEAN PATENT APPLICATION

(11) **EP 4 277 202 A1**
(43) Date of publication of application: **15.11.2023**
(21) Application number: 22173144.1
(22) Date of filing: 13.05.2022
(51) Int. Cl.: H04L 9/40, H04L 12/40

(54) **THREAT DETECTION FOR A PROCESSING SYSTEM OF A MOTOR VEHICLE**

(71) Applicant: Elektrobit Automotive GmbH, 91058 Erlangen (DE)
(72) Inventor: Kurumbudel, Prashanth Ram, 60488 Frankfurt am Main (DE)
(74) Representative: Continental Corporation

(57) **Abstract**

The present invention is related to a method, a computer program code, and an apparatus for detecting a threat for a processing system of a motor vehicle. The invention is further directed towards a motor vehicle and a backend, which make use of such a method or apparatus. In a first step, driving context data associated with a driving context of the motor vehicle are received (S1). In addition, driving pattern data may be received (S2). Simulated network messages of the motor vehicle are then generated (S3) from the driving context data and, if available, the driving pattern data. Finally, by comparing the simulated network messages with actual network messages of the motor vehicle, a threat is detected (S4). In addition, a threat may be predicted (S5) from the simulated network messages. In case a threat is detected (S4) or predicted (S5), appropriate counter measures may be initiated (S6).

## Description

The present invention is related to a method, a computer program code, and an apparatus for detecting a threat for a processing system of a motor vehicle. The invention is further directed towards a motor vehicle and a backend, which make use of such a method or apparatus.

Nowadays practically all motor vehicles come with in-vehicle networks, be it CAN (Controller Area Network), LIN (Local Interconnect Network), Flexray, or MOST (Media Oriented Systems Transport). An increasing number of motor vehicles make use of an ethernet network. In addition, many motor vehicles offer the possibility of data connections or are equipped with external interfaces, e.g., motor vehicles with modern head units. Such motor vehicles might be vulnerable to attacks. For example, viruses or malware might be injected into the vehicle network, resulting in an abnormal behavior of the network or devices on the network. Therefore, the problem of cyber or network security in motor vehicles is increasingly coming into focus.

A current approach used for intrusion detection is based on an individual packet analysis. For example, EP 3 373 553 A1 discloses a system for securing an in-vehicle network in a vehicle. The system comprises a switch connected to at least two segments of the in-vehicle network and an intrusion detection and prevention system unit connected to the switch. The intrusion detection and prevention system unit is adapted to receive network messages from the switch, determine at least some of the network messages are related to a cyber threat based on a deep packet analysis of the network messages, and configure the switch according to the cyber threat.

A drawback of this approach is that it is not easily upgradable and extendable, which leaves the motor vehicle vulnerable to the attacks.

The article by M.D. Hossain et al.: "LSTM-Based Intrusion Detection System for In-Vehicle Can Bus Communications", IEEE Access, Vol. 8 (2020), pp. 185489-185502, discloses an intrusion detection system that makes use of a long short-term memory to detect and mitigate the CAN bus network attacks. A dataset for testing and training a model is generated by first extracting attack-free data from an experimental car and by injecting attacks into the latter and collecting the dataset.

It is an object of the present invention to provide an alternative solution for detecting a threat for a processing system of a motor vehicle.

This object is achieved by a method according to claim 1, by a computer program code according to claim 12, which implements this method, and by an apparatus according to claim 13. This object is further achieved by a motor vehicle according to claim 14 and a backend according to claim 15. The dependent claims include advantageous further developments and improvements of the present principles as described below.

According to a first aspect, a method for detecting a threat for a processing system of a motor vehicle comprises the steps of:
- receiving driving context data associated with a driving context of the motor vehicle;
- generating simulated network messages of the motor vehicle from at least the driving context data; and
- detecting a threat by comparing the simulated network messages with actual network messages of the motor vehicle.

Accordingly, a computer program code comprises instructions, which, when executed by at least one processor, cause the at least one processor to perform the following steps for detecting a threat for a processing system of a motor vehicle:
- receiving driving context data associated with a driving context of the motor vehicle;
- generating simulated network messages of the motor vehicle from at least the driving context data; and
- detecting a threat by comparing the simulated network messages with actual network messages of the motor vehicle.

The term computer has to be understood broadly. In particular, it also includes distributed systems, embedded devices, electronic control units and other processor-based data processing devices.

The computer program code can, for example, be made available for electronic retrieval or stored on a computer-readable storage medium.

According to another aspect, an apparatus for detecting a threat for a processing system of a motor vehicle comprises:
- a reception unit configured to receive driving context data associated with a driving context of the motor vehicle;
- a simulation unit configured to generate simulated network messages of the motor vehicle from at least the driving context data; and
- a detection unit configured to detect a threat by comparing the simulated network messages with actual network messages of the motor vehicle.

In modern motor vehicles there will be a lot of messages flowing in the vehicular network at any given point in time with different parametric values, depending on the state of the vehicle, the environment of the vehicle, the driving conditions, and the driving pattern. It has been found that it is not only possible to derive the driving context from these messages, but that it is likewise possible to artificially construct such messages based on the driving context. The general term driving context data describes the data collected while driving in certain scenario. This can be classified as per the details of the environment where the vehicle is being driven. Exemplary driving contexts may include dense traffic on an expressway, dense traffic on an expressway with wet roads, free expressway with rain, moderately dense street with sunshine, city traffic, narrow city street with a speed limit of 30 km/h, driving on a forest road without street lights in the night, etc. Of course, the driving context data can be a combination of multiple driving contexts. The more driving contexts are considered, the more the system is refined.

According to the invention, simulated network messages of the motor vehicle are generated from at least the driving context data. Ideally, the resulting set of simulated messages and the actual messages should be similar. If there is a discrepancy, this is an indication that the messages flowing in the vehicle network are compromised or the vehicle has been influenced by an external agent, e.g., due to an attack on the vehicle. In this case, appropriate counter measures may be initiated. The described solution can be used with any type of in-vehicle network.

In an advantageous embodiment, the simulated network messages of the motor vehicle are generated from the driving context data and driving pattern data. The pattern of messages in the network not only has a correlation with the driving context, but also with the driving pattern of the driver. Using driving pattern data in addition to driving context data thus enables a refined generation of simulated network messages. This in turn allows a more accurate threat detection. Driving pattern data is collected from the way how a vehicle is driven. The driving pattern data is related to the driving context, i.e., in a certain driving context the motor vehicle will be driven in a particular pattern. For example, the driving pattern data may contain speed, transmission state, acceleration, location (x, y coordinates), steering amount, brake status, etc.

In an advantageous embodiment, the driving context data comprise image data or video data. From images of the driving environment, it is easily possible to determine the driving context. The images or a video stream are preferably captured by a camera system of the motor vehicle. The camera system may comprise just one camera or multiple cameras mounted around the motor vehicle. In case of a single camera, it is preferably located in the front of the motor vehicle.

In an advantageous embodiment, the driving context data further comprise sensor data. For example, data stemming from Lidar sensors, Radar sensors or ultrasonic distance sensors may be used as additional driving context data. This allows determining a more exhaustive driving context.

In an advantageous embodiment, the image data or video data and the sensor data are subjected to sensor fusion. During sensor fusion the sensor inputs are mapped onto the video stream coming from the camera system, i.e., the sensor data are embedded in the video stream. This makes the video stream more informative.

In an advantageous embodiment, a threat is detected if a similarity between the simulated network messages and the actual network messages is below a threshold. According to the invention, the simulated network messages are compared with the actual network messages. If there is a discrepancy, this is an indication of a threat. One possibility to detect a discrepancy is to determine a similarity between the two sets of messages and to compare this similarity with a threshold. The threshold may be defined, for example, by a manufacturer of the motor vehicle.

In an advantageous embodiment, the simulated network messages are generated by an autoencoder network. Autoencoder networks are well-suited for converting data from one domain to another domain. The images captured from the camera system are fed into the neural network, which extracts the features and converts the features into a seed. This seed is then fed into the next network, which processes the seed to reconstruct the data, but in a different domain, namely network messages. Of course, also other artificial intelligence technologies may be used. Using artificial intelligence approaches makes the solution more powerful and accurate. In addition, the solution may easily be upgraded from time to time.

In an advantageous embodiment, the autoencoder network is based on a recurrent neural network. In order to be able to detect threats in real-time, it is advantageous if the simulated messages are generated in real-time. Recurrent neural networks are well-suited for this purpose, as they are able generate a series of messages with time.

In an advantageous embodiment, the autoencoder network comprises a long short-term memory network with multi-encoders. One encoder is responsible for learning the features or encoding of the video stream, whereas another encoder is responsible for encoding the sequence of network messages. The learned representations of these encoders are fed into a decoder network, which generates the network messages that will match with the actual messages flowing in the vehicle network at that point in time. The use of a long short-term memory network is advantageous because such networks are capable of handling complex problems.

In an advantageous embodiment, a threat is predicted from the simulated network messages. The described solution not only allows detecting that the messages flowing in the vehicle network are already compromised, but also predicting an upcoming attack. This is possible by analyzing the way how the message pattern changes over time.

Advantageously, a motor vehicle or a backend configured to be communicatively coupled to a motor vehicle comprises an apparatus according to the invention or is configured to perform a method according to the invention for detecting a threat for a processing system of the motor vehicle. For example, the motor vehicle may be a (semi-)autonomous or manually driven connected car. However, the described solution is likewise suitable for other types of motor vehicles, such as drones, airplanes, or ships. In view of the ever-increasing processing power available in modern motor vehicles, the solution according to the invention can be implemented in the motor vehicle. Alternatively, the necessary processing can be done in a backend, which means that there will only be a minimal load on the on-board computers of the motor vehicle. Of course, the threat detection may also be distributed between the motor vehicle and the backend. For example, the backend may generate simulated network messages based on the received data and transmit these simulated network messages to the motor vehicle. A comparison between the simulated network messages and the actual network messages for threat detection may then be performed in the motor vehicle.

Further features of the present invention will become apparent from the following description and the appended claims in conjunction with the figures.

### Figures

- Fig. 1: schematically illustrates a method for detecting a threat for a processing system of a motor vehicle;
- Fig. 2: schematically illustrates a first embodiment of an apparatus for detecting a threat for a processing system of a motor vehicle;
- Fig. 3: schematically illustrates a second embodiment of an apparatus for detecting a threat for a processing system of a motor vehicle;
- Fig. 4: schematically illustrates a motor vehicle in which a solution according to the invention is implemented;
- Fig. 5: schematically illustrates an autoencoder neural network;
- Fig. 6: schematically illustrates an autoencoder neural network with multi-encoders;
- Fig. 7: schematically shows the employed neural networks and how to build an artificial intelligence model for threat detection;
- Fig. 8: schematically shows how to build an artificial intelligence model for threat prediction; and
- Fig. 9: shows a system diagram of the solution according to the invention.

### Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, by a plurality of individual processors, some of which may be shared, by a graphic processing Unit (GPU), or by banks of GPUs. Moreover, explicit use of the term "processor" or "controller" should not be construed to refer exclusively to hardware capable of executing software, and may implicitly include, without limitation, digital signal processor (DSP) hardware, systems on a chip, microcontrollers, read only memory (ROM) for storing software, random-access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

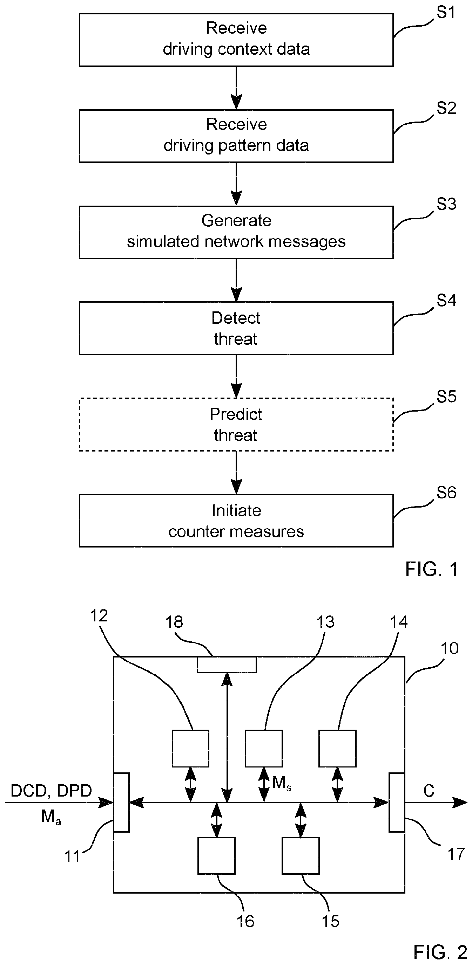

Fig. 1 schematically illustrates a method according to the invention for detecting a threat for a processing system of a motor vehicle. In a first step, driving context data associated with a driving context of the motor vehicle are received S1. For example, the driving context data may comprise image data or video data. The driving context data may further comprise sensor data. In addition, driving pattern data may be received S2. Simulated network messages of the motor vehicle are then generated S3 from the driving context data and, if available, the driving pattern data. For this purpose, an autoencoder network may be used. Advantageously, the autoencoder network is based on a recurrent neural network. For example, the autoencoder network may comprise a long short-term memory network with multi-encoders. Finally, by comparing the simulated network messages with actual network messages of the motor vehicle, a threat is detected S4. For example, a threat may be detected S4 if a similarity between the simulated network messages and the actual network messages is below a threshold. In addition, a threat may be predicted S5 from the simulated network messages. In case a threat is detected S4 or predicted S5, appropriate counter measures may be initiated S6.

Fig. 2 schematically illustrates a block diagram of a first embodiment of an apparatus 10 according to the invention for detecting a threat for a processing system of a motor vehicle. The apparatus 10 has an input 11, via which a reception unit 12 receives driving context data DCD associated with a driving context of the motor vehicle. For example, the driving context data DCD may comprise image data or video data. The driving context data may further comprise sensor data. The reception unit 12 may further receive driving pattern data DPD via the input 11. A simulation unit 13 is configured to generate simulated network messages Mₛ of the motor vehicle from the driving context data DCD and, if available, the driving pattern data DPD. For this purpose, the simulation unit 13 may use an autoencoder network. Advantageously, the autoencoder network is based on a recurrent neural network. For example, the autoencoder network may comprise a long short-term memory network with multi-encoders. A detection unit 14 is configured to detect a threat by comparing the simulated network messages Mₛ with actual network messages Mₐ of the motor vehicle. The actual network messages Mₐ may likewise be received by the reception unit 12 via the input 11. For example, a threat may be detected by the detection unit 14 if a similarity between the simulated network messages and the actual network messages is below a threshold. The detection unit 14 may further be configured to predict a threat from the simulated network messages Mₛ. In case a threat is detected or predicted, appropriate counter measures may be initiated by the detection unit 14 or another component of the apparatus 10. For this purpose, a control signal C may by provided via an output 17 of the apparatus 10. The output 17 may be combined with the input 11 into a single interface. A local storage unit 16 is provided for storing data during processing.

The reception unit12, the simulation unit 13, and the detection unit 14 may be controlled by a control unit 15. A user interface 18 may be provided for enabling a user to modify settings of the reception unit12, the simulation unit 13, the detection unit 14, or the control unit 15. The reception unit12, the simulation unit 13, the detection unit 14, and the control unit 15 can be embodied as dedicated hardware units. Of course, they may likewise be fully or partially combined into a single unit or implemented as software running on a processor, e.g., a CPU or a GPU.

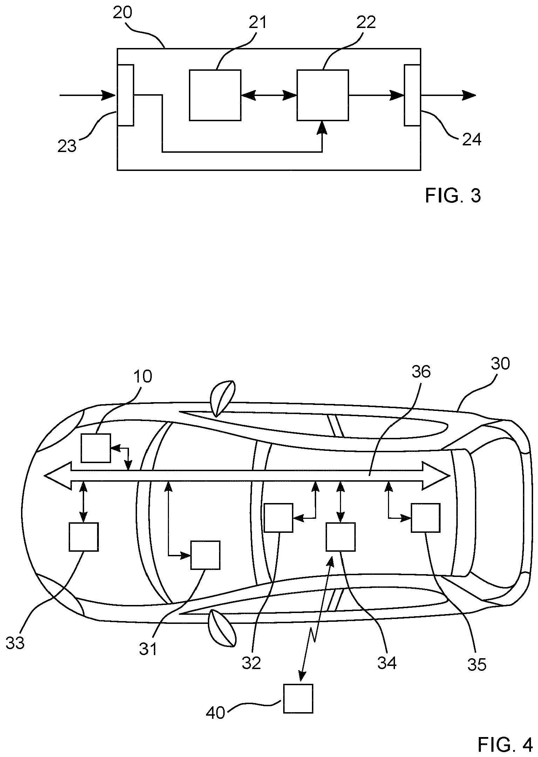

A block diagram of a second embodiment of an apparatus 20 according to the invention for detecting a threat for a processing system of a motor vehicle is illustrated in Fig. 3. The apparatus 20 comprises a processing device 22 and a memory device 21. For example, the apparatus 20 may be a computer, an electronic control unit or an embedded system. The memory device 21 has stored instructions that, when executed by the processing device 22, cause the apparatus 20 to perform steps according to one of the described methods. The instructions stored in the memory device 21 thus tangibly embody a program of instructions executable by the processing device 22 to perform program steps as described herein according to the present principles. The apparatus 20 has an input 23 for receiving data. Data generated by the processing device 22 are made available via an output 24. In addition, such data may be stored in the memory device 21. The input 23 and the output 24 may be combined into a single bidirectional interface.

The processing device 22 as used herein may include one or more processing units, such as microprocessors, digital signal processors, or a combination thereof.

The local storage unit 16 and the memory device 21 may include volatile and/or non-volatile memory regions and storage devices such as hard disk drives, optical drives, and/or solid-state memories.

Fig. 4 schematically shows a motor vehicle 30, in which a solution in accordance with the invention is implemented. In this example, the motor vehicle 30 is a car. The motor vehicle 30 has at least one processing system 31, e.g., for providing an autonomous driving functionality. The processing system 31 may process environment data captured by at least one camera 32 and a number of other environment sensors 33, such as ultrasonic sensors, laser scanners, lidar sensors, or radar sensors. A data transmission unit 34 allows a connection to a remote backend 40 or to other motor vehicles. A memory 35 is available for storing data. The data exchange between the different components of the motor vehicle 30 takes place via a network 36. An apparatus 10 according to the invention makes use of the data provided by the camera 32 and the environment sensors 33 as well as the network messages exchanged via the network 36 for detecting a threat for the processing system 31. Alternatively, threat detection may be performed by the backend 40. In this case, the data provided by the camera 32 and the environment sensors 33 as well as the network messages are transmitted to the backend 40 by the data transmission unit 34. Of course, the threat detection may also be distributed between the motor vehicle 30 and the backend 40. For example, the backend 40 may generate simulated network messages based on the received data and transmit these simulated network messages to the motor vehicle 30. A comparison between the simulated network messages and the actual network messages for threat detection may then be performed in the motor vehicle 30.

In the following, further details of a solution according to the invention shall be given.

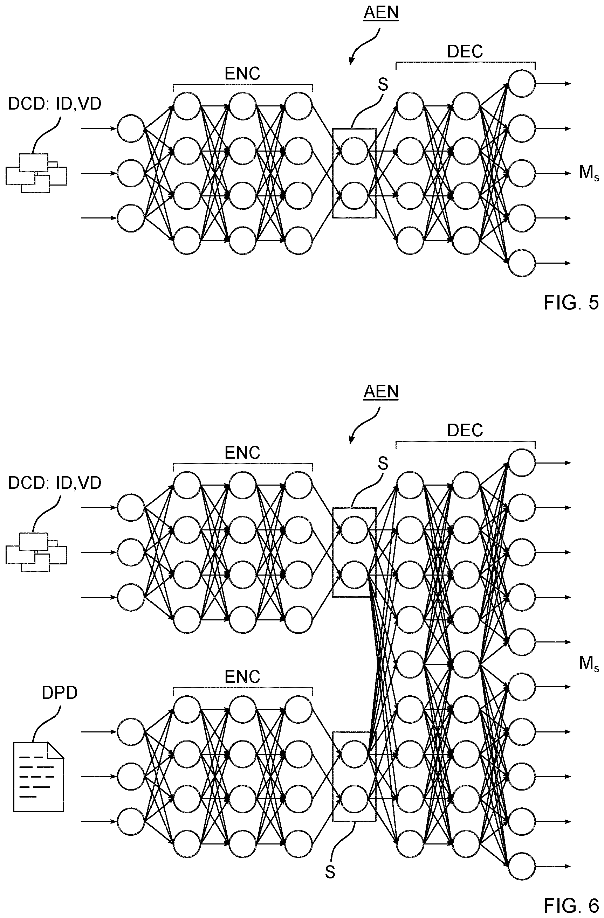

Fig. 5 schematically illustrates an autoencoder neural network AEN. The autoencoder neural network AEN comprises an encoder network ENC and a decoder network DEC and converts the data in one domain into another domain. In particular, the image data ID or video data VD captured by a camera system are fed into the encoder network ENC, which extracts the features and converts the features into a seed S. This seed S is fed into the decoder network DEC, which processes the seed S to reconstruct the data, but in a different domain, namely messages. These simulated network messages Mₛ are the network messages which appear in the vehicle network.

At any given point in time, the messages in the vehicle network appear in a pattern. This pattern has a correlation with the driving context. Therefore, when the simulated network messages Mₛ are generated from the driving context data, there will be a similarity between these artificial messages and the actual messages in the vehicle network.

These messages in the vehicle network will also have a correlation with the driving pattern of the driver. Therefore, when the driving pattern DPD is added to the driving context, the output of the autoencoder neural network AEN will be more refined and there will be a similarity between the simulated network messages Mₛ generated by the neural networks and the actual messages that appear in the vehicle network. The resulting autoencoder neural network AEN is a multi-encoder neural network, as schematically illustrated in Fig. 6. As can be seen, the autoencoder neural network AEN comprises two encoder networks ENC and one decoder network DEC.

As long as the simulated network messages Mₛ generated by the networks ENC, DEC and the actual network messages in the vehicle network are matching, it can be assumed that the vehicle is safe. As soon as there occur differences between these two sets of messages, it can be assumed that there is an intrusion.

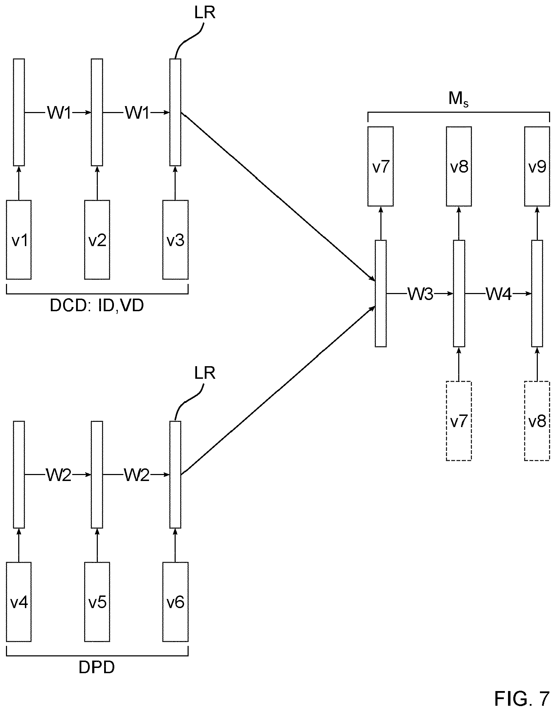

As the system should be able to produce a stream of simulated network messages in real-time, a recurrent neural network is advantageously used. Fig. 7 schematically shows the employed neural networks and how to build an artificial intelligence model for threat detection. Here, long short-term memory networks with multi-encoders are used. One encoder is responsible for learning the features or encoding of the image data ID or video data VD, whereas another encoder is responsible for encoding the sequence of network messages. The learned representations LR of these encoders are fed into a decoder network, which generates the network messages that will match with the actual messages flowing in the vehicle network at that point in time. The elements v1, v2, and v3 are video inputs. These video inputs are either plain video streams coming from a camera system, or a video stream fusioned with sensor data. The elements v4, v5, and v6 are driving pattern data with timesteps. These indicate, for example, a series of speed changes or gear changes during the course of driving. The elements v7, v8, and v9 are the simulated vehicular messages produced by the neural network. As a recurrent neural network is used, the output of one layer is provided as input to the next layer. W1 to W4 are the sets of weights. These are the hyperparameters of the artificial neural networks involved in this system. During the training phase, these weights get tuned so that the network produces accurate outputs. These weights are preferably in the form of numeric / decimal multi-dimension matrices.

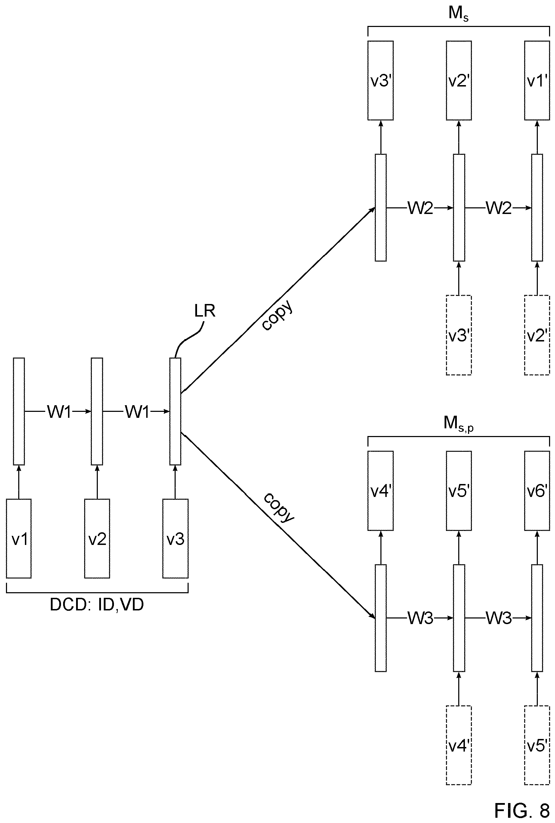

Fig. 8 schematically shows how to build an artificial intelligence model for threat prediction. Using this kind of setup, future network messages M_{s,p} in the vehicle network can also be predicted. Based on these predicted messages M_{s,p}, future attacks on the motor vehicle can be predicted. In Fig. 8, only one encoder is shown for simplicity. Of course, this approach can be scaled up for any number of encoders, depending on the types of data that are used. The elements v1, v2, and v3 are video inputs. Embedded in these video inputs are driving pattern data and sensor data. The elements v1', v2', and v3' are the simulated vehicular messages produced by the neural network, whereas v4', v5', and v6' are the simulated messages at time t+x, where t is the current time and x is the offset. In other words, v4', v5', and v6' are predicted messages that may occur in the vehicular network in the future. As before, W1 to W3 are the sets of weights. In order to enable threat prediction, the decoder part of the employed neural network generates the simulated messages for time t+x. In the first use case of finding the attack, the neural network keeps producing the simulated messages, which are then compared with the actual messages of the vehicular network. To predict a threat, another network is needed, which uses a copy of the currently produced network messages, which are provided by the vehicle, as the input, and predicts the future messages. This also takes the video inputs.

As a result, the available inputs are the current context data, the current vehicular network messages and the simulated messages. Using this data, the neural network is able to predict the next set of messages at time t+x. The driving context will generally not change dramatically. For example, it cannot change rapidly from high traffic to low traffic on the road, as it will take some time for the traffic to dissolve. If the predicted messages show that there will be a drastic change in the driving context, this may be because of a compromised security system of the vehicle. For threat prediction, a lot of data is needed, which preferably stem from the implementation of the first use case.

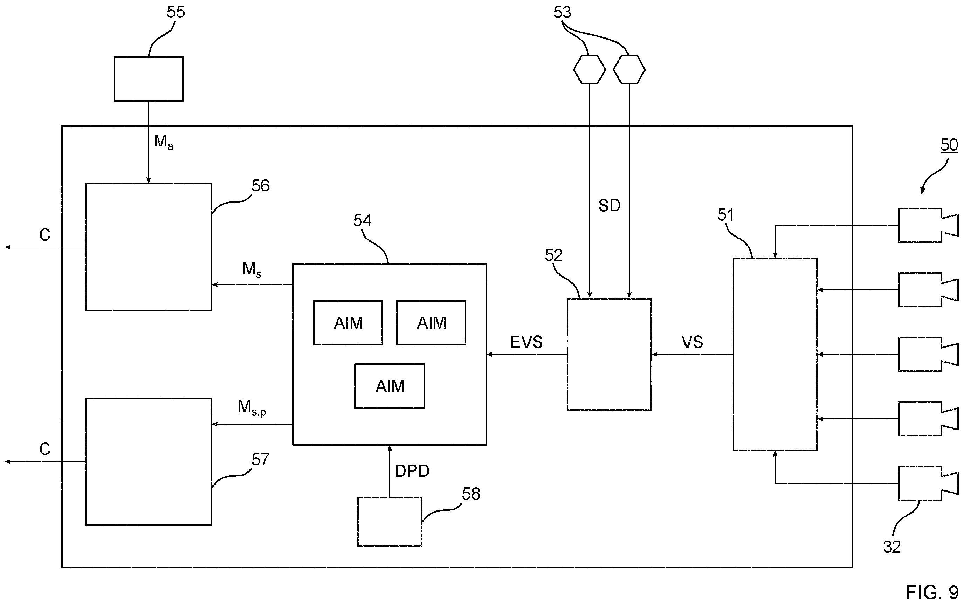

Fig. 9 shows a system diagram of the solution according to the invention. A bank of cameras 32 of a camera system 50 is connected to a camera fusion block 51. The camera system 50 can comprise just one camera 32 or multiple cameras 32, as shown in Fig. 9. These cameras 32 can be mounted around the motor vehicle. If a single camera 32 is used, it is preferably arranged at the front of the motor vehicle. Furthermore, in this case the camera fusion block 51 is not needed. Camera fusion joins the video streams from different sides of the motor vehicle.

The system may further comprise a camera / sensor fusion block 52. This block 52 is not necessarily present in every motor vehicle. In autonomous vehicles, this block will usually be part of the system. The camera / sensor fusion block 52 maps sensor data SD from various sensors 53 onto the video stream VS coming from the camera fusion block 51. By embedding the sensor data SD in the video stream VS, a more informative enhanced video stream EVS is generated. For example, the enhanced video stream EVS may include traffic data and weather data in addition to video stream. The enhanced video stream EVS is fed to an artificial intelligence processing block 54, more particular into the banks of artificial intelligence models AIM described above. In addition, driving pattern data DPD may be provided to the artificial intelligence processing block 54 by a driving pattern data collection block 58. The output of the artificial intelligence processing block 54 are the simulated network messages Mₛ. This output is compared with the actual network messages Mₐ from the vehicle network at the given point in time, which are provided through a vehicle gateway 55. This is done in a threat detection block 56. If any difference between these two sets of messages is found, this is an indication that security of the vehicle is compromised, or that the vehicle is under threat. A threat prediction block 57 receives predicted messages M_{s,p} from the artificial intelligence model AIM shown in Fig. 8. If there is any parameter that would indicate a threat, the threat detection block 56 or the threat prediction block 57 sends a corresponding control signal C for further processing, like giving out a warning to the user or informing a backend team.

In a driving context, at a given time, there are a number of messages flowing in the vehicular network. Consider, as a first example, a car that is traveling on the road, on a sunny day, with moderate traffic on the road. Temperature outside is 30 degrees c.

In this driving context, the simulated messages may be:
Speed: ≈60
Engine rotations per minute: 3000 to 4000
Transmission state: 4th / 5th
Windows: Closed / Open
Heating, Ventilation and Air Conditioning: ON (If windows closed)
Wiper: OFF

In a first example, the actual messages are:
Speed: 60
Engine rotations per minute: 6000
Transmission state: 2nd
Windows: Open
Heating, Ventilation and Air Conditioning: ON
Wiper: ON

In the above example, the simulated speed matches the actual speed. None of the other parameters match. This is a good case for further analysis of the system for external threats.

In a second example, the actual messages are:
Speed: 60
Engine rotations per minute: 3600
Transmission state: 4th
Windows: Open
Heating, Ventilation and Air Conditioning: ON
Wiper: ON

In the above example, 50% of the simulated and actual messages match. This also can be further examined, but chances of a threat are less than in the first example.

In a third example, the actual messages are:
Speed: 60
Engine rotations per minute: 2800
Transmission state: 5th
Windows: Open
Heating, Ventilation and Air Conditioning: ON
Wiper: OFF

In this example, the Wipers also off as expected in the simulated messages. Only the state of Heating, Ventilation and Air Conditioning is not as expected. This scenario can be ignored.

Of course, the above messages are only an example. Many other vehicular parameters can be used for the actual prediction.

### Reference numerals

- 10: Apparatus
- 11: Input
- 12: Reception unit
- 13: Simulation unit
- 14: Detection unit
- 15: Control unit
- 16: Local storage unit
- 17: Output
- 18: User interface
- 20: Apparatus
- 21: Memory device
- 22: Processing device
- 23: Input
- 24: Output
- 30: Motor vehicle
- 31: Processing system
- 32: Camera
- 33: Environment sensors
- 34: Data transmission unit
- 35: Memory
- 36: Network
- 40: Backend
- 50: Camera system
- 51: Camera fusion block
- 52: Camera / sensor fusion block
- 53: Sensor
- 54: Artificial intelligence processing block
- 55: Vehicle gateway
- 56: Threat detection block
- 57: Threat prediction block
- 58: Driving pattern data collection block

- AEN: Autoencoder network
- AIM: Artificial intelligence model
- C: Control signal
- DCD: Driving context data
- DEC: Decoder network
- DPD: Driving pattern data
- ENC: Encoder network
- EVS: Enhanced video stream
- ID: Image data
- LR: Learned representation
- Mₐ: Actual network message
- Mₛ: Simulated network message
- SD: Sensor data
- VD: Video data
- VS: Video stream

- S1: Receive driving context data
- S2: Receive driving pattern data
- S3: Generate simulated network messages
- S4: Detect threat
- S5: Predict threat
- S6: Initiate counter measures

## Claims

1. A method for detecting a threat for a processing system (31) of a motor vehicle (30), the method comprising:
- receiving (S1) driving context data (DCD) associated with a driving context of the motor vehicle (30);
- generating (S3) simulated network messages (Mₛ) of the motor vehicle (30) from at least the driving context data (DCD); and
- detecting (S4) a threat by comparing the simulated network messages (Mₛ) with actual network messages (Mₐ) of the motor vehicle (30).

2. The method according to claim 1, wherein the simulated network messages (Mₛ) of the motor vehicle (30) are generated (S3) from the driving context data (DCD) and driving pattern data (DPD).

3. The method according to claim 1 or 2, wherein the driving context data (DCD) comprise image data (ID) or video data (VD).

4. The method according to claim 3, wherein the driving context data (DCD) further comprise sensor data (SD).

5. The method according to claim 4, wherein the image data (ID) or video data (VD) and the sensor data (SD) are subjected to sensor fusion.

6. The method according to one of the preceding claims, wherein a threat is detected (S4) if a similarity between the simulated network messages (Mₛ) and the actual network messages (Mₐ) is below a threshold.

7. The method according to one of the preceding claims, wherein the simulated network messages (Mₛ) are generated (S3) by an autoencoder network (AEN).

8. The method according to claim 7, wherein the autoencoder network (AEN) is based on a recurrent neural network.

9. The method according to claim 7 or 8, wherein the autoencoder network (AEN) comprises a long short-term memory network with multi-encoders.

10. The method according to one of the preceding claims, further comprising predicting (S5) a threat from the simulated network messages (Mₛ).

11. The method according to one of the preceding claims, wherein the method is performed in the motor vehicle (30), in a remote backend (40) communicatively coupled to the motor vehicle (30), or distributed between the motor vehicle (30) and the remote backend (40).

12. A computer program code comprising instructions, which, when executed by at least one processor, cause the at least one processor to perform a method according to any of claims 1 to 11 for detecting a threat for a processing system (31) of a motor vehicle (30).

13. An apparatus (10) for detecting a threat for a processing system (31) of a motor vehicle (30), the apparatus (10) comprising:
- a reception unit (12) configured to receive (S1) driving context data (DCD) associated with a driving context of the motor vehicle (30);
- a simulation unit (13) configured to generate (S3) simulated network messages (Mₛ) of the motor vehicle (30) from at least the driving context data (DCD); and
- a detection unit (14) configured to detect (S4) a threat by comparing the simulated network messages (Mₛ) with actual network messages (Mₐ) of the motor vehicle (30).

14. A motor vehicle (30), wherein the motor vehicle (30) comprises an apparatus (10) according to claim 13 or is configured to perform a method according to any of claims 1 to 11 for detecting a threat for a processing system (31) of the motor vehicle (30).

15. A backend (40), wherein the backend (40) comprises an apparatus (10) according to claim 13 or is configured to perform a method according to any of claims 1 to 11 for detecting a threat for a processing system (31) of a motor vehicle (30).
